# EUROPEAN PATENT SPECIFICATION

(11) **EP 0 589 479 B1**
(45) Date of publication and mention of the grant of the patent: **21.01.1998**
(21) Application number: 93115459.5
(22) Date of filing: 24.09.1993
(51) Int. Cl.: G11B 17/22

(54) **Apparatus for automatically recording a disc**
Automatisches Plattenaufzeichnungsgerät
Appareil d'enregistrement automatique d'un disque

(30) Priority: 24.09.1992 JP 280793/92
(43) Date of publication of application: 30.03.1994
(73) Proprietor: PIONEER ELECTRONIC CORPORATION, Meguro-ku Tokyo (JP)
(72) Inventor: Morita, Yuji, c/o Tokorozawa Koujou, Tokorozawa-shi, Saitama-ken (JP); Sato, Hiroyuki, c/o Tokorozawa Koujou, Tokorozawa-shi, Saitama-ken (JP); Suzuki, Toru, c/o Tokorozawa Koujou, Tokorozawa-shi, Saitama-ken (JP); Ikedo, Yuji, c/o Tokorozawa Koujou, Tokorozawa-shi, Saitama-ken (JP)
(74) Representative: Popp, Eugen, Dr.

(56) References cited:
- EP-A- 0 138 005
- EP-A- 0 163 463
- EP-A- 0 277 634
- EP-A- 0 280 263
- EP-A- 0 284 445
- EP-A- 0 370 722
- EP-A- 0 427 531
- WO-A-92/13343
- DE-A- 3 908 840
- IBM TECHNICAL DISCLOSURE BULLETIN. vol. 15, no. 2 , July 1972 , NEW YORK US pages 632 - 633 D.S.PROPER 'Cartridge handling mechanism'

## Description

### BACKGROUND OF THE INVENTION

The present invention relates to a disc recording apparatus for recording information on a disc such as optical disc, and more particularly to a disc carrier device in the recording system.

Recently, a singalong system using an optical disc (laser disc) or a compact disc has become popular. In the singalong system, an automatic changer system is provided for automatically taking out a selected disc by the user and reproducing it. After reproducing, the disc is automatically returned to a storing position. The changer system comprises a commander for controlling a selecting operation and a plurality of automatic changers each of which is operated to change and reproduce the disc. There is a recording system cooperated with the singalong system for recording the song sung by the user on a cassette tape for presenting it to the user.

The write once disc and the writable disc can be used as a recording medium for such a recording system. There has been proposed to use such an automatic changer system in the disc recording system in order to improve the recording system. However, the disc is gripped by a gripper of a carrier in the automatic changer. In order to grip the disc in the storing position, a large space is provided between the discs. As a result the size of the system becomes large.

Document US-A-3.444.334 discloses a disc recording device comprising a storage magazine with a pile of blank discs, a turntable for recording the lower most disc from the storage magazine and a delivery mechanism. The documents EP-A-0 277.634, EP-A-0 284 445 and DE-A-39 08 840 disclose disc storage devices comprising the features mentioned in the preamble of claim 1.

### SUMMARY OF THE INVENTION

An object of the present invention is to provide a disc recording apparatus where a disc is extracted from a storing position, and loaded on a recording device, and a recorded disc is discharged from the system in a simple operation.

Another object of the invention is to provide a recording apparatus in which the distance between discs may be reduced thereby reducing the size of the system.

According to the present invention, there is provided an apparatus for recording a disc according to claim 1.

The guide means of the casing means may be provided for vertically guiding the carrier, and the recording means is disposed in a bottom of casing means. The extractor is slidably provided on the carrier so as to extract a disc.

The other objects and features of this invention will become understood from the following description with reference to the accompanying drawings.

### BRIEF DESCRIPTION OF DRAWINGS

Fig. 1 is a perspective view showing an optical disc recording apparatus according to the present invention;
Fig. 2 is a perspective view showing an outlet for a recorded disc of the apparatus;
Fig. 3 is a perspective view showing a disc recording system in the apparatus;
Fig. 4 is a perspective view showing a disc storing portion;
Fig. 5 is a plan view showing a disc indicating device;
Fig. 6 is a plan view showing the disc indicating device in which a disc holder is inserted;
Fig. 7 is a perspective view showing the disc holder;
Fig. 8 is a perspective view showing the holder viewed from a rear;
Fig. 9 is a schematic plan view showing a extractor in the holder;
Fig. 10 is a perspective view partly showing an inner casing;
Fig. 11 is a perspective view showing a disc carrier device;
Fig. 12 is a perspective view showing the disc carrier device viewed from the rear;
Fig. 13 is a perspective view showing a tray having a disc in an inclined state;
Fig. 14 is a plan view showing an operation of a extractor;
Fig. 15 is a sectional view partly showing a feeding system;
Fig. 16 is a plan view showing a part of the feeding system;
Fig. 17 is a side view showing the tray in a rotating state;
Fig. 18 is an explanatory side view showing an operation of the disc carrier device in an early stage;
Fig. 19 is an explanatory view showing the extractor moved to a disc;
Fig. 20 is an explanatory view where the disc on the extractor is loaded on the tray;
Fig. 21 is an explanatory view where the carrier device is lowered to a recording device;

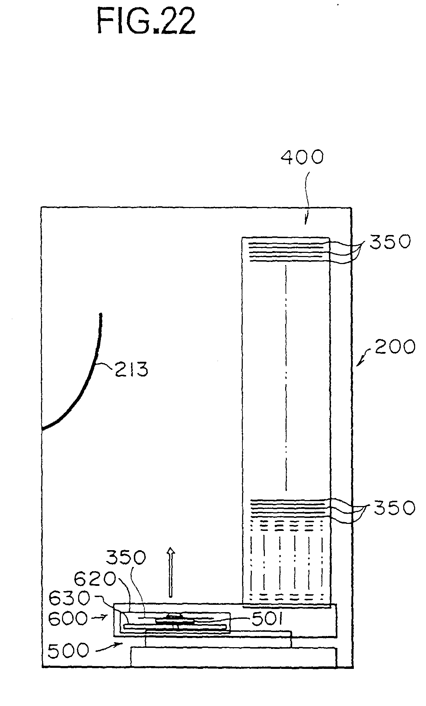

Fig. 22 shows the disc in the carrier device in a recording state by the recording device;
Fig. 23 shows the carrier device moved upwardly to a pocket;
Fig. 24 shows the tray rotated for discharging the disc from the carrier device;
Fig. 25 shows the carrier device to be lowered; and
Fig. 26 shows the carrier device to a position for a next disc.

### DETAILED DESCRIPTION OF THE PREFERRED EMBODIMENT

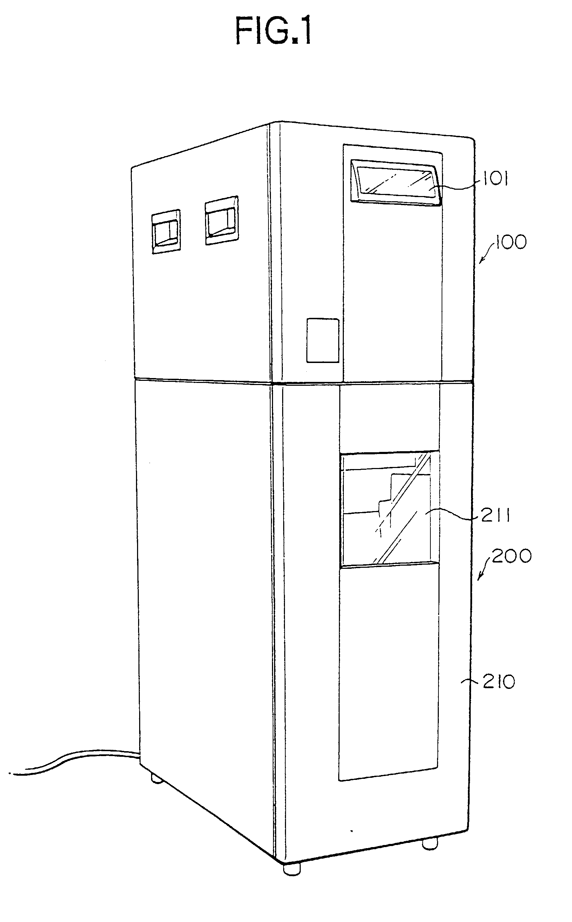

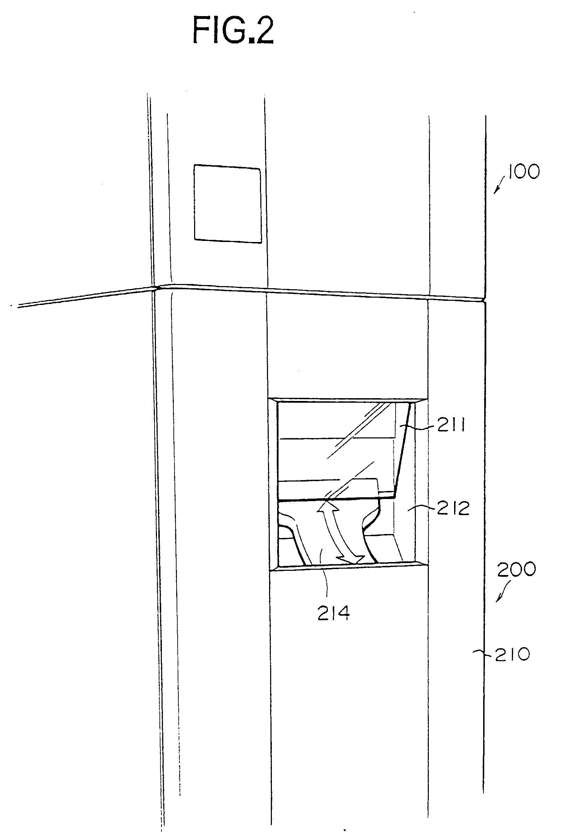

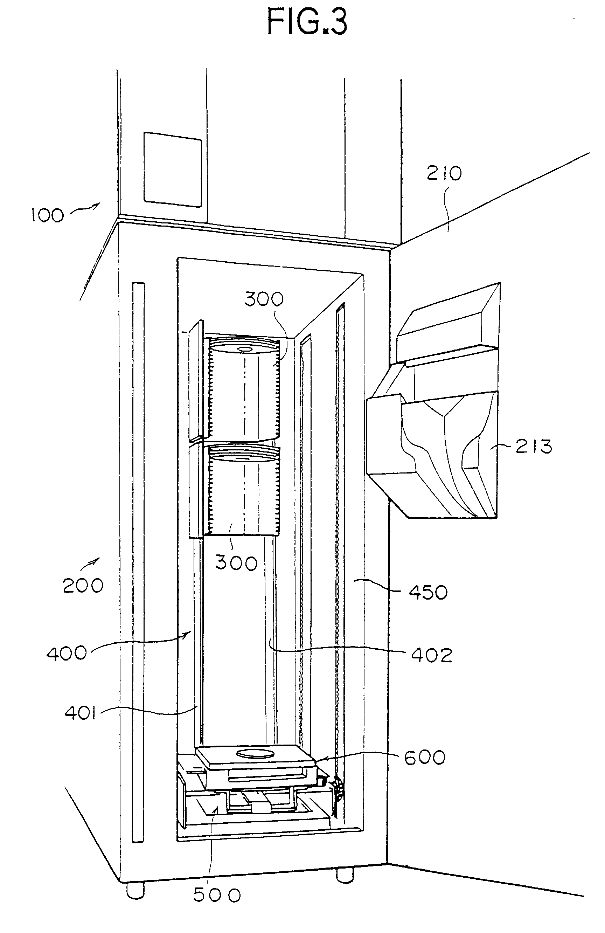

Referring to Figs. 1 to 3, a disc recording apparatus of the present invention comprises a charge box 100 and a disc recording device 200. The charge box 100 is provided with a money slot 101 in a front portion thereof. The recording device 200 has a casing having a door 210 with a transparent flap 211 for covering a disc outlet 212. As shown in Fig. 2, the flap 211 is inwardly opened and a disc tray 214 is provided in the outlet. As shown in Fig. 3, the outlet 212 is communicated with a disc pocket 213 formed on an inner portion of the door 210. A damper is provided on the tray 214.

An inner casing 450 is provided in the disc recording device 200. A disc holder storing portion 400 for storing a plurality of disc holders 300 is provided in the innermost portion of the casing 450. A disc recording device 500 is mounted on a base plate of the casing 450, and a disc carrier device 600 is provided on the recording device 500. This position is a waiting position of the device 600.

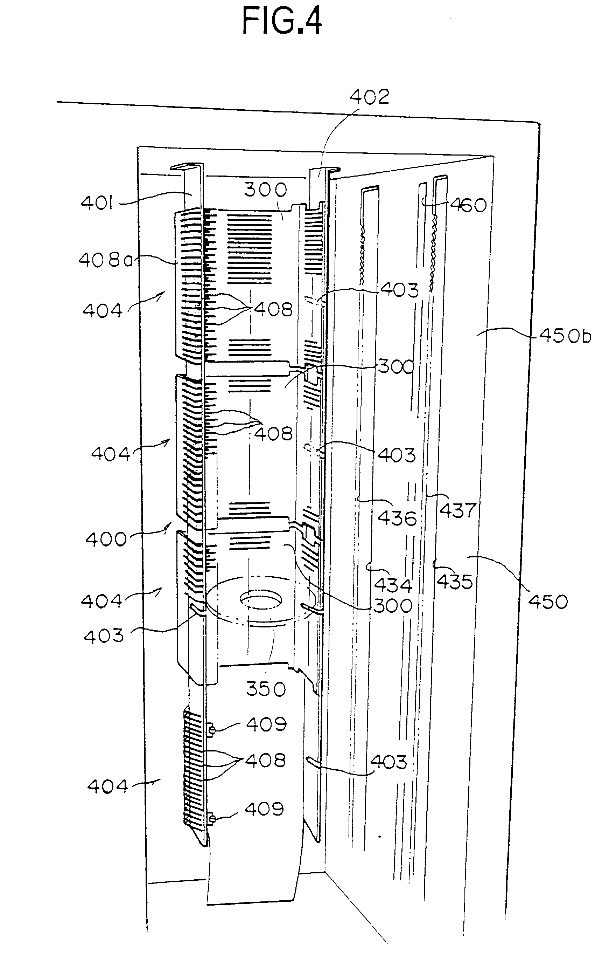

As shown in Fig. 4, the disc holder storing portion 400 comprises a pair of supporting plates 401 and 402 provided in the vertical direction. The supporting plates 401 and 402 are disposed parallel with each other at a distance of the width of the holder 300. Each plate has a plurality of horizontal notches 403 formed corresponding to the notches of the opposite plate at a predetermined distance for supporting the holder.

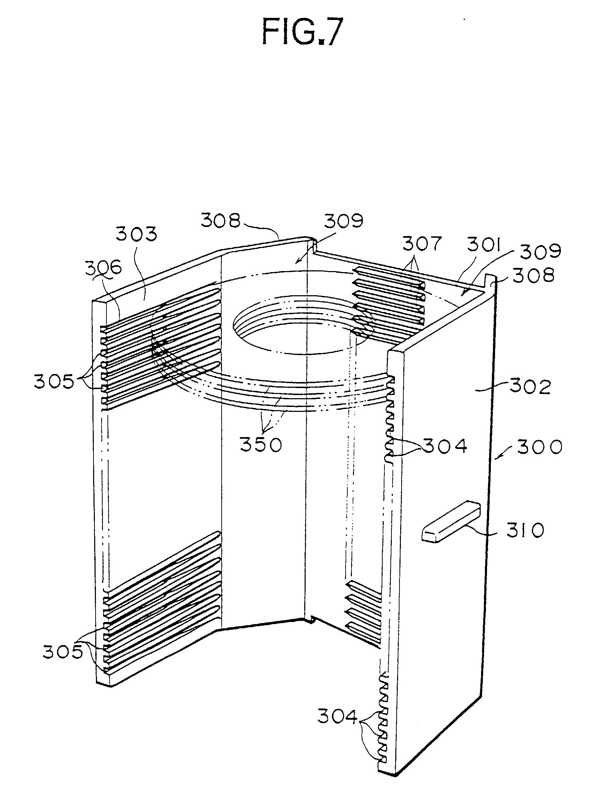

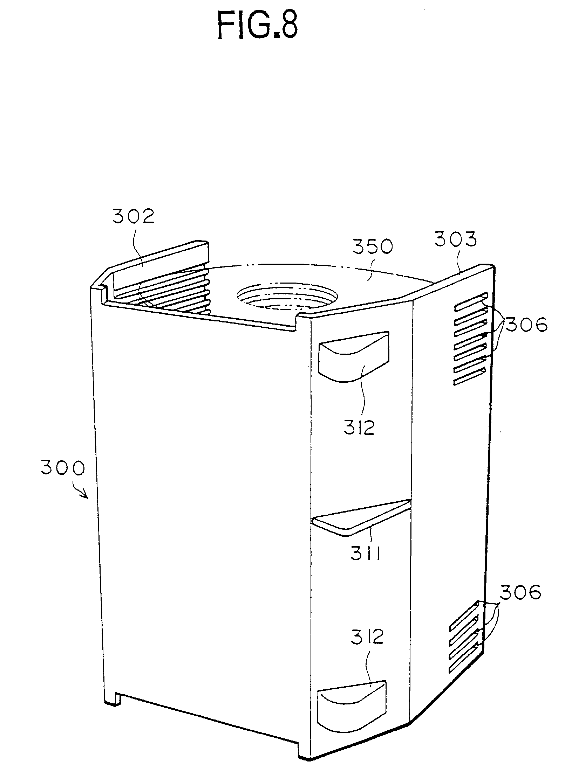

Referring to Figs. 7 and 8, the disc holder 300 is provided for holding a plurality of optical discs 350 in the vertical direction. The disc holder comprises a main plate 301, a side plate 302 and a side plate 303 having a folded portion 308 to form approximately a U-shape in plane. A plurality of horizontal grooves 304 and 305 are formed on insides of the side plates 302 and 303 respectively, at a predetermined distance. On the outside of the side plate 303, a plurality of openings 306 are formed to be connected to the grooves 305. The main plate 301 has a plurality of horizontal projections 307 on the inside thereof.

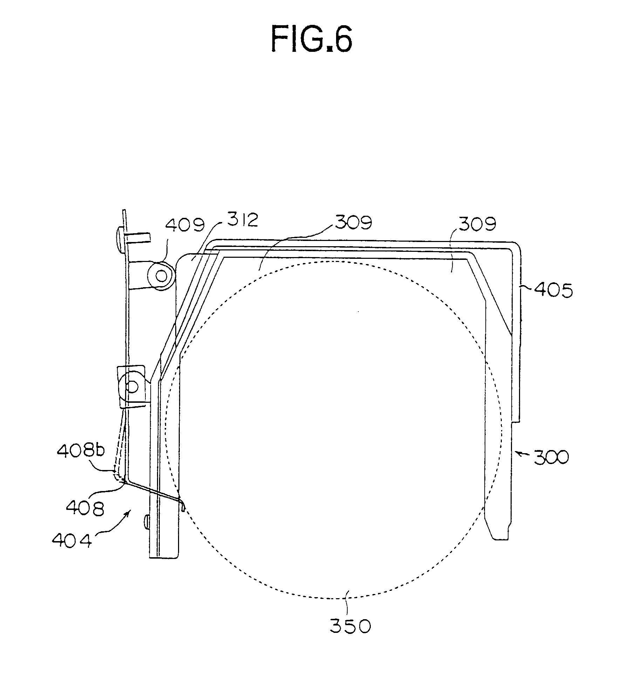

The disc 350 is engaged with the grooves 304 and 305 and a space between the projections 307. Thus, the discs are horizontally held in the holder 300. When the discs are mounted in the holder, a pair of spaces 309 is defined between the disc and inner wall portions of the holder (Fig. 6). These spaces are effective to load the disc from the holder on the recording device 500 by the carrier device 600, which will be described hereinafter.

On the outside of the side plate 302 and the folded portion 308 of the side plate 303, horizontal projections 310 and 311 are formed in a central portion to be engaged with the horizontal notches 403 of the supporting plates 401 and 402. A pair of projections 312 are provided on the folded portion 308 opposite to the projection 311.

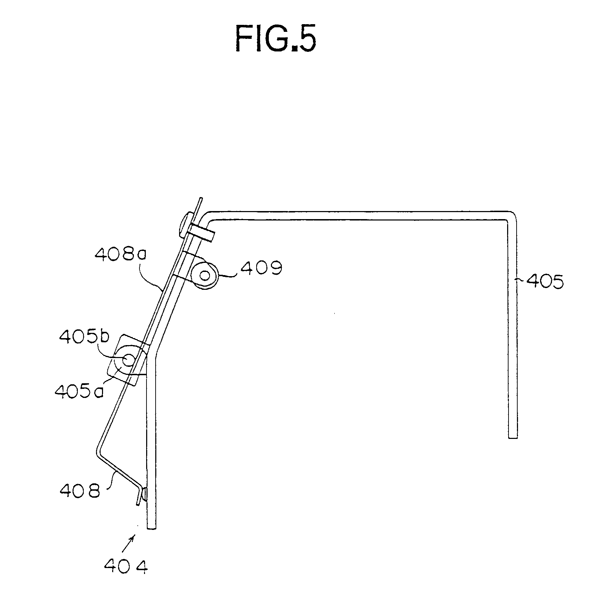

Fig. 5 shows a disc indicating device 404 provided on the supporting plates 401 and 402 corresponding to each holder 300. The disc indicating device 404 comprises a frame 405 secured to the supporting plates 401 and 402, a spring base plate 408a (Fig. 4) which is pivotally mounted on the frame 405 by brackets 405a and pin 405b, a plurality of springs 408 integral with the spring base plate 408a, and a pair of rollers 409 provided on the base plate 408a. Each spring 408 corresponds to a stored disc 350, and the rollers 409 correspond to the projections 312 of the holder 300.

As shown in Fig. 6, when the holder 300 is mounted in the frame 405, the projections 312 of the holder are engaged with the rollers 409 to outwardly urge the rollers. Thus, the base plate 408a and the springs 408 are pivoted about the pin 405b and the end of each spring 408 is inserted into the holder 300 through the opening 306. When the disc 350 is mounted in the holder 300, the end of the spring 408 is engaged with the periphery of the disc to outwardly urge the spring 408. Consequently, the spring is bent as shown by a dotted line. If the disc is not mounted in the holder, the spring 408 is at the solid line. Thus, the discs 350 in the holder 300 are easily determined in accordance with the position of the spring 408.

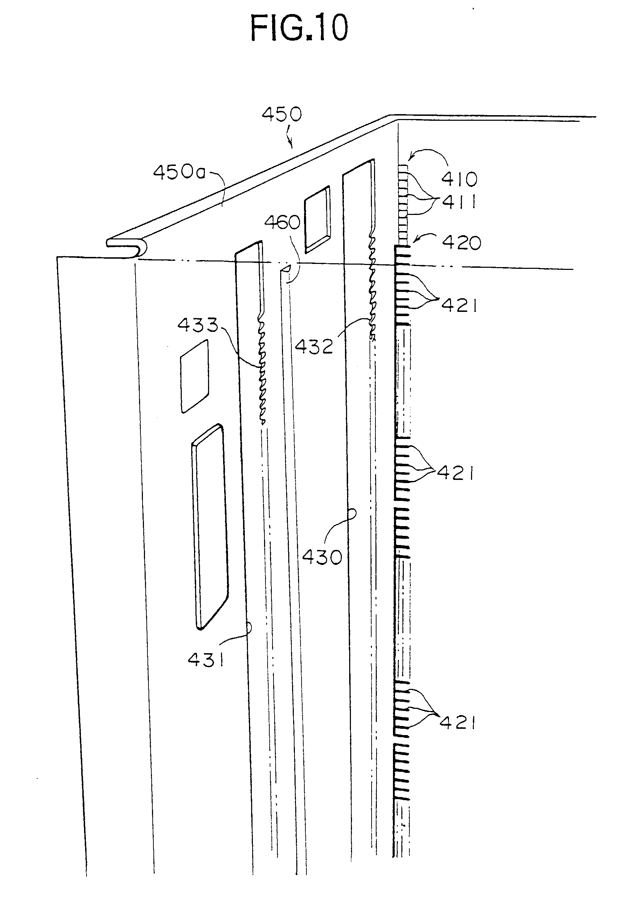

Referring to Fig. 10, the inner casing 450 is provided with a pair of vertical openings 430 and 431 formed on a side plate 450a thereof for moving the carrier device 600 in the vertical direction. Racks 432 and 433 are formed at one of the inside walls of the respective vertical openings 430 and 431. A vertical slit 460 is formed between the openings 430 and 431.

On the corner of the side plate 450a, a clearance regulating member 410 having a plurality of recesses 411 is provided for regulating a clearance of the carrier device 600 in the vertical direction when stopping. A detecting plate 420 having a plurality of slits 421 is provided in front of the member 410 for detecting a disc loading position of the carrier device.

As shown in Fig. 4, on an opposite side plate 450b, vertical openings 434 and 435 each of which has a rack 436 (437), and a vertical slit 460 are formed corresponding to the openings 430 and 431, and the vertical slit 460 of the side plate 450a.

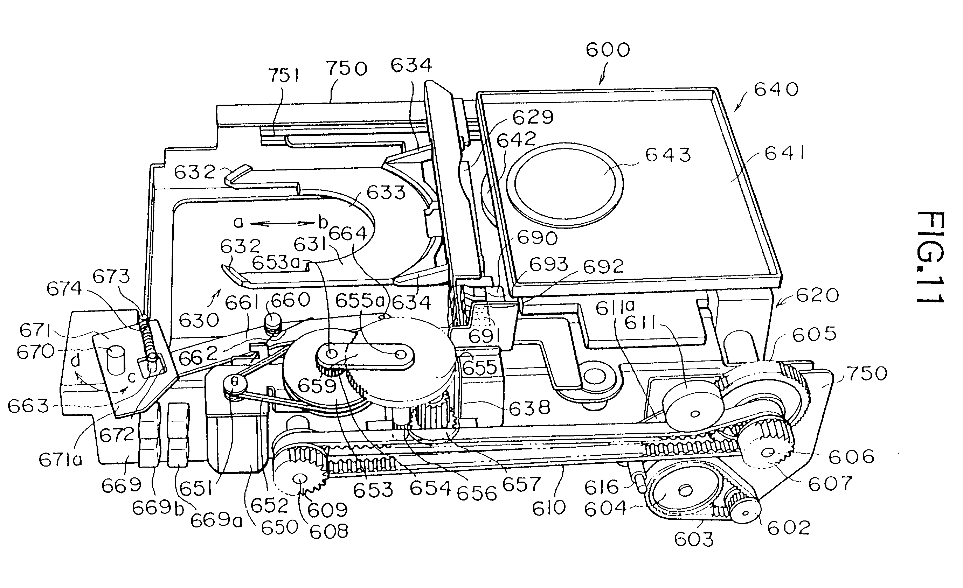

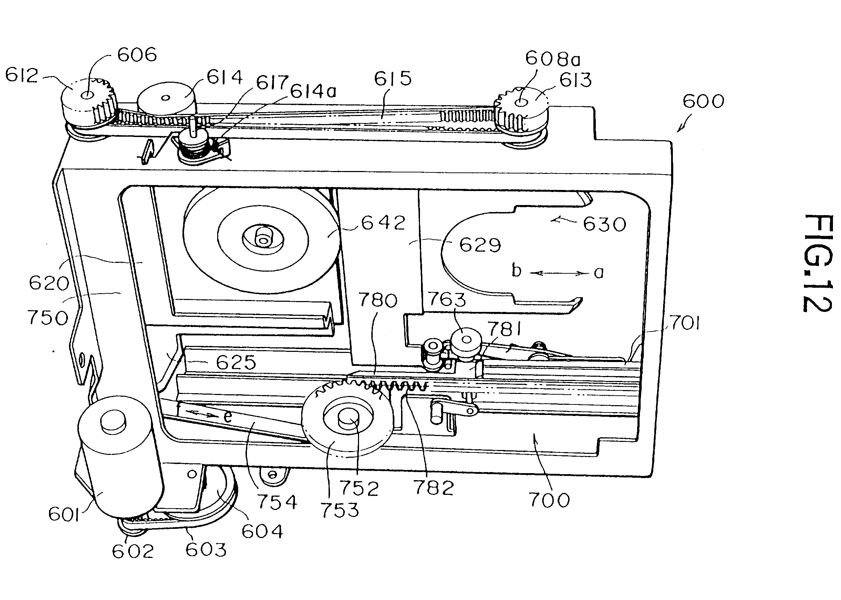

Referring to Figs. 11 and 12 showing the disc carrier device 600, the carrier device comprises a frame 750 which is to be slidably mounted on the side plate 450a and 450b. A motor 601 is mounted on the underside of the frame 750 at a rear portion thereof. A rotating shaft of the motor 601 has a drive pulley 602 which is connected to a driven pulley 604 through a timing belt 603 provided between the pulleys 602 and 604. Since outer teeth of the pulleys 602 and 603 are engaged with inner teeth of the timing belt 603, the belt is prevented from slipping, thereby increasing a transmission efficiency of the power. The driven pulley 604 is connected to a gear 605 through a small gear (not shown) and a middle gear (not shown) engaged with the small gear. The gear 605 is secured to a shaft 606 rotatably mounted on the frame 750. A drive gear 607 is securely mounted on the shaft 606 interposing a drive pulley. A drive gear 609 is secured to a shaft 608 rotatably mounted on the frame 750, interposing a driven pulley. A timing belt 610 is provided between the pulleys on the shafts 606 and 608. A tension roller 611 which is rotatably mounted on an end of a lever 611a is engaged with the belt 610. A pin 616 is provided on the other end of lever 611a and urged to the belt by a spring (not shown).

As shown in Fig. 12, on the opposite side of the frame 750, a drive gear 612 is secured to the shaft 606 and a drive gear 613 is secured to a shaft 608a rotatably mounted on the frame. A timing belt 615 is provided between pulleys on the shafts 606 and 608a. A tension roller 614 mounted on a lever 614a is engaged with the belt 615. A pin 617 is provided on the lever 614a and urged to the belt by a spring (not shown).

Each of the pins 616 and 617 is provided with a roller (not shown) which is engaged with the vertical slit 460 of the inner casing 450 so as to guide the carrier device 600 in the vertical direction and to regulate a clearance of the device in the forward and backward directions. The drive gears 607, 609, 612 and 613 are inserted in the vertical openings 430, 431, 434 and 435 of the casing and engaged with racks 432, 433, 436 and 437, respectively. When the gears are rotated in the clockwise directions, the carrier device 600 is lowered along the supporting plates. When the gears are rotated in the counterclockwise directions, the carrier device is moved upwardly.

The disc carrier device 600 further comprises a tray 620 rotatably mounted on the shaft 606 at leg portions 625 (Fig. 12), a extractor 630 slidably mounted in the frame 750, and a clamper 640 provided on the tray.

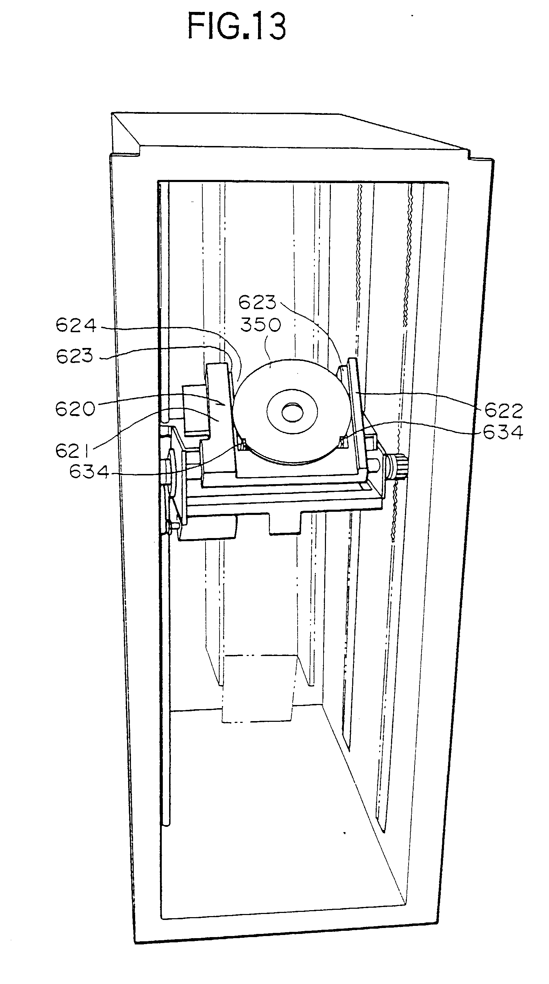

As shown in Fig. 13, the tray 620 comprises frames 621 and 622 for mounting the clamper 640, and engaging portions 623 provided on the lower portion of the frames 621 and 622 to be engaged with the disc 350 when loading the disc.

The clamper 640 is secured to the frames 621 and 622 by screws and comprises a base plate 641, a disc plate 643 mounted on the base plate, and a disc clamper 642 mounted on a lower portion of the disc plate 643. The disc clamper 642 is disposed in a space 624 defined by the frames 621 and 622.

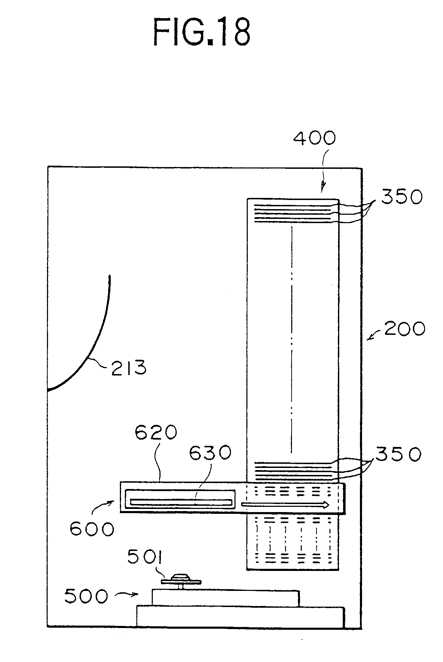

The extractor 630 is provided in the space 624 and secured to a slide plate 629 slidably mounted in grooves 751 of the frame 750 at an end portion 629b to be movable in the directions shown by arrows a and b. The extractor 630 comprises a disc mounting plate 631 having a U-shaped opening 633. A pair of lugs 632 are formed on the end portions of the plate 631 to be engaged with the disc 350. The opening 633 has a space enough to engage a turntable 501 (Fig. 18) of the recording device 500. A pair of lugs 634 are provided on the slide plate for holding a disc on the disc mounting plate 631.

A switch section 690 is provided adjacent to the clamper 640. The switch section 690 comprises a first switch 691 detecting an end position of the extractor 630 in the direction a, a second switch 692 detecting an end position of the extractor 630 in the direction b, and a third switch 693 detecting a position of the lowest disc 350 in the holder 300.

A motor 650 is provided on the frame 750 for operating the tray 620 and the extractor 630. A rotating shaft of the motor 650 has a drive pulley 651. The drive pulley 651 is connected to a driven pulley 653 which is secured to a shaft 653a rotatably mounted on the frame 750. A belt 652 is provided between the pulleys 651 and 653 so as to transmit the power of the motor 650 to the pulley 653. A gear 654 coaxially mounted on the pulley 653 is engaged with a gear 655 which is connected to a gear 657 through a gear 656 coaxially mounted on the gear 655. A plate 659 is provided between the shafts 655a and 653a for preventing the gears from vibrating. The gear 657 is connected to a slide device 700 through a gear 638 coaxially mounted on the gear 657, which will be described hereinafter.

A lever 661 is rotatably mounted on a shaft 660 and urged in the clockwise direction by a spring 662. The lever 661 has a pin 663 provided at an end thereof to be engaged with a hole 672 formed on a plate 671 which is pivotally mounted on a shaft 670. The plate 671 is provided to be engaged with the recess 411 of the clearance regulating member 410 of the inner casing. A spring 674 is provided between a pin 673 of the plate 671 and the pin 663. The lever 661 further has a pin 664 downwardly projected from the lever at the other end.

A photosensor 669 is provided on a lower portion of the plate 671. The photosensor 669 has a light emitting device 669a and a light receiving device 669b. Between the devices 669a and 669b, the detecting plate 420 (Fig. 10) of the inner casing 450 is inserted.

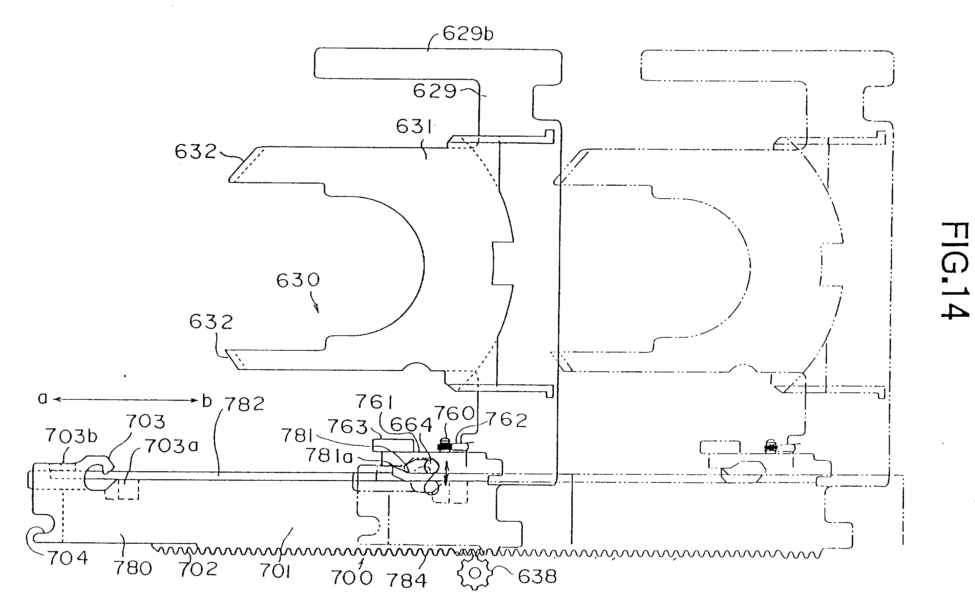

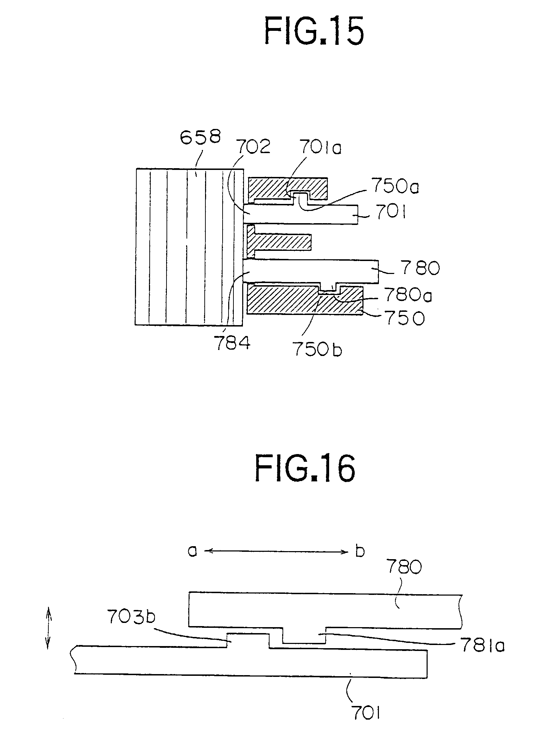

Referring to Fig. 14, the slide device 700 comprises an upper slide plate 701 secured to the slide plate 629 at an end portion and a lower slide plate 780 provided on a lower portion of the upper slide plate 701 an shown in Fig. 15. The upper slide plate 701 has a rack 702 engaged with the gear 638. The lower slide plate 780 has a rack 784 engaged also with the gear 638. The upper slide plate 701 has an upper projection 701a slidably engaged with a groove 750a formed on the frame 750. The lower plate 780 has a lower projection 780a slidably engaged with a groove 750b formed on the frame 750. When the gear 638 is rotated, the slide plates are slid in the horizontal direction.

The upper slide plate 701 comprises a hook 703 engaged with the pin 664 of the lever 661 when the plate is moved to an end position in the direction b, a cam 703a to be engaged with the switch 692, a groove 704 engaged with a pin (not shown) when the plate is moved to an end position in the direction a, and a projection 703b formed on a lower portion of the hook 703.

At the other end of the slide plate 701, a lever 761 is rotatably mounted on a shaft 760 secured to the plate 701. The lever 761 is upwardly urged by a spring 762. A roller 763 is rotatably mounted on an end of the lever 761 to be engaged with the spring 408 of the disc indicating device 404. When the roller is engaged with the spring 408, the other end of the lever 761 is upwardly moved against the spring force of the spring 762 to be engaged with the switch 693 so that the switch 693 is closed.

The lower slide lever 780 has a cam 781 to be engaged with the projection 703b of the upper slide plate 701.

When the upper slide plate 701 is at an end position in the direction a, the lower slide plate 780 is also at an end position in the direction a. In this state, the rack 702 of the plate 701 is engaged with the gear 638 and the rack 784 is disengaged from the gear 638. When the slide plate 701 is moved in the direction b, to a position immediately before the end position, the projection 703b is engaged with the cam portion 781 at an end 781a. Thus, the lower slide plate 780 is slightly moved in the direction b, thereby engaging the rack 784 with the gear 638. When the upper slide plate 701 is positioned to the end position, the rack 702 is disengaged from the gear 638. The lower plate 780 is moved in the direction b.

If the plates 701 and 780 are positioned to the respective end positions in the direction b, the lower slide plate 780 is moved in the direction a first. At a position immediately before the end position, the end portion 781a of the cam 781 is engaged with the projection 703b to move the plate 701 so that the rack 702 of the upper plate 701 engages with the gear 638. When the lower plate 780 is moved to the end position, the lower plate is disengaged from the gear 638.

The pin 664 of the lever 661 is moved by the cam 781 in the directions shown by arrows (Fig. 14). Thus, the lever 661 is rotated in the clockwise direction or counterclockwise direction. When the lever 661 is rotated in the clockwise direction, the pin 663 of the lever is engaged with the hole 672 to urge the plate 671 in the direction c. When the lever 661 is rotated in the counterclockwise direction, the pin 663 is disengaged from the hole 663 so that the plate 671 is rotated in the direction d by the spring 674. In this state, a corner portion 671a is engaged with the recess 411 of the clearance regulating member 410 (Fig. 10). Thus, the clearance of the carrier device 600 is regulated.

The plate 671 is rotated when the pin 664 is displaced by the cam 781 of the lower slide plate 780. If the extractor 630 is mounted in the tray 620 at a predetermined position, the plate 671 is rotated in the direction c. If the extractor is fed in the direction a, the plate 671 is rotated in the direction d. When the extractor is moved to immediately before the end position in the direction a, the plate is rotated in the direction c to disengage the corner 671a from the recess 411. Thus, the carrier device 600 is moved up for loading the disc.

When the disc is loaded from the holder and the extractor is moved in the direction b, the plate is rotated in the direction d. When the extractor is moved to the predetermined position, the plate is rotated in the direction c.

When a recorded disc 350 is discharged from the carrier device, the plate 671 is operated. Namely, when the tray 620 is rotated to discharge the disc, the plate 671 is rotated in the direction d. When the tray is rotated back to the horizontal position, the plate is rotated in the direction c.

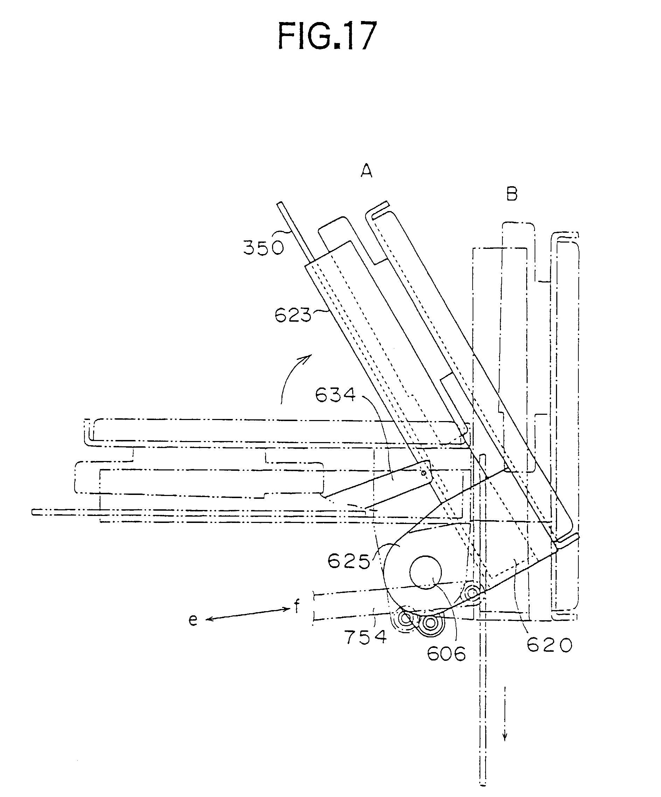

As shown in Fig. 12, the lower slide plate 780 is provided with a rack 782 formed on the lower portion thereof. The rack 782 is engaged with a gear 753 rotatably mounted on a shaft 752 secured to the frame 750. A lever 754 is pivotally secured to the gear 753 at an end thereof. The other end of the lever is rotatably mounted on the leg portion 625 of the tray 620 as shown in Fig. 17.

When the lower plate 780 is moved in the direction b, the gear 753 engaged with the rack 782 is rotated in the counterclockwise direction. The lever 754 is moved in a direction e a power of which is exerted on the leg portion 625, to rotate the tray 620 in the direction shown by an arrow e of Fig. 17. Thus, the disc 350 mounted on the extractor 630 retracted in the tray 620 is discharged from the tray.

At a position A, as shown in Fig. 17, the engaging portions 623 of the tray 620 are engaged with the periphery of the recorded disc 350 to lift up the disc from the extractor 630. Since the lugs 634 are engaged with the disc, the disc is prevented from removing. When the lower plate 780 is to the end position, the tray 620 is rotated to a position B, so that the disc is removed from the lugs 634 and dropped in the pocket 213 by self-weight.

Thereafter, the lower plate is moved in the direction a, the gear 753 is rotated in the clockwise direction to move the lever 754 in a direction f. Thus, the tray 620 is rotated to the position A and then to the horizontal position.

The operation of the recording system is described hereinafter.

A plurality of unrecorded discs 350 are mounted in each disc holder 300. Since the recording device 500 is provided on the lower portion of the holder 300 in the storing portion 400, a recording surface of each disc is faced to the downward. The holders 300 having discs 350 are mounted in the storing portion 400 in order. The projections 310 and 311 of each holder 300 are engaged with the notches 403 of the supporting plates 401 and 402 (Fig. 4). The projections 312 of the holders are engaged with the rollers 409 of the disc indicating device 404 to urger the rollers outwardly. Since each holder is filled with the discs, all the springs 408 are projected from the holder as shown in Fig. 6 by the dotted line.

Thereafter, a start switch is operated to start the operation of the system.

Since the position of the lowermost disc is not determined in the initial step of the operation, the carrier device 600 is slowly raised to the lowermost disc. On the other hand, after the initial step, the loading device is quickly raised as described hereinafter.

First, an initialization operation of the carrier device 600 will be described. When the start switch is turned on the carrier device 600 is slowly moved up. When the carrier device 600 reaches the lowermost disc, the roller 763 (Fig. 12) engages with the projected spring 408b (Fig. 8). Accordingly, the lever 761 (Fig. 14) is rotated to operate the switch 693 so as to close it. Thus, the motor 601 is stopped, thereby to stop the carrier device 600. The position of the lowest disc 350 is detected by the photosensor 669 through the detecting plate 420 and the detected position is stored in the memory for the use of the detection of the subsequent disc. Namely, in the next loading operation, the carrier device 600 is moved up at a high speed to a position near the position of the last disc stored in the memory in the last recording operation.

Then, the carrier device is slowly moved to engage the roller 763 with the spring 408 without shock and stopped at the position. The position is stored for the next disc.

The operation is described in more detail hereinafter.

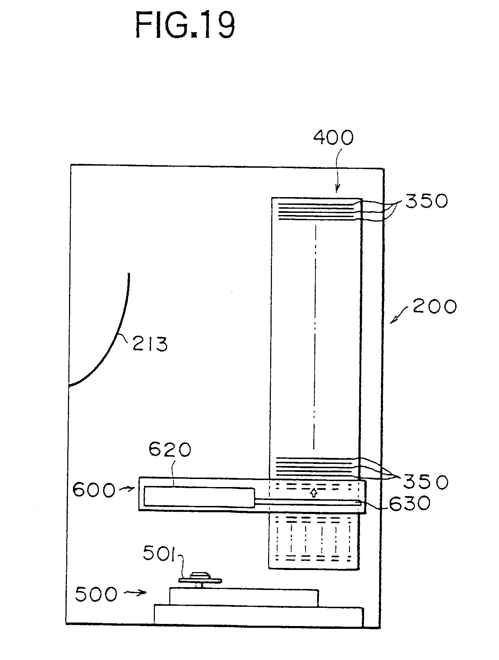

When the disc carrier device 600 reaches the lowest disc as shown in Fig. 18, the extractor 630 is projected from the tray 620 as shown in Fig. 19. The roller 763 on the lever 761 is also projected together with the extractor 630. When the roller 763 is engaged with the projected spring 408b, the lever 761 is rotated to turn on the switch 693. Thus, the carrier device stops rising.

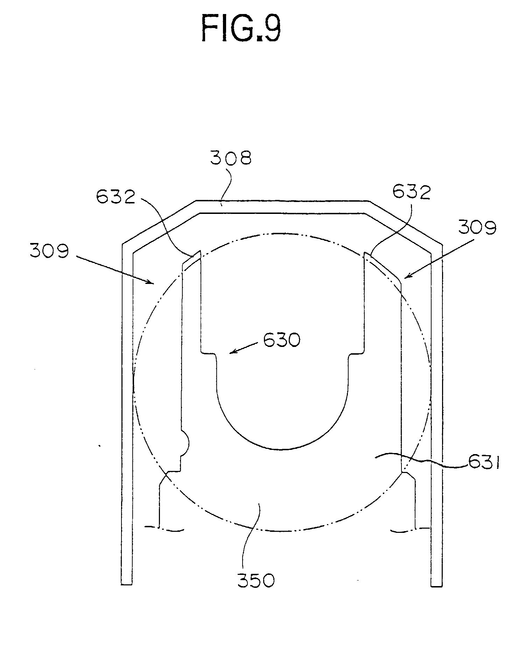

As shown in Fig. 9, the lugs 632 of the extractor 630 are located in the spaces 309 to be engaged with the periphery of the disc 350 and the disc is mounted on the mounting plate 631.

At this time, the plate 671 (Fig. 11) is urged in the direction d to engage the corner 671a of the plate to the recess 411 of the clearance regulating member 410.

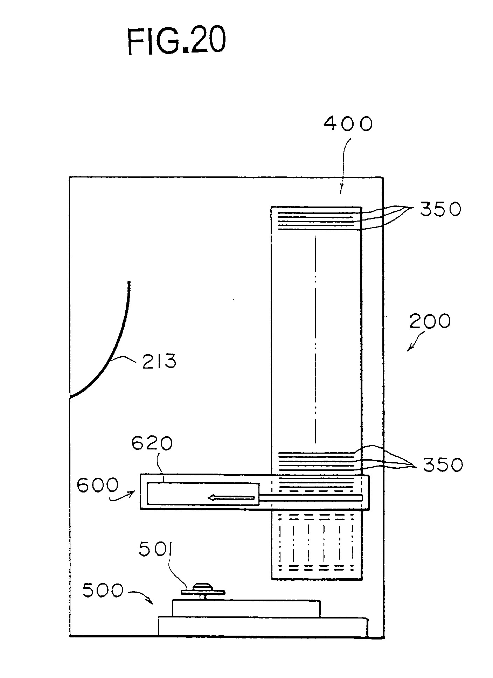

As shown in Fig. 20, the extractor 630 is retracted in the tray 620 so that the lugs 632 engage with the disc 350 mounted on the mounting plate 631 pull out the disc from the disc holder 300. When the extractor is completely retracted in the tray 620, the plate 671 is rotated in the direction c to disengage the corner 671a from the recess 411.

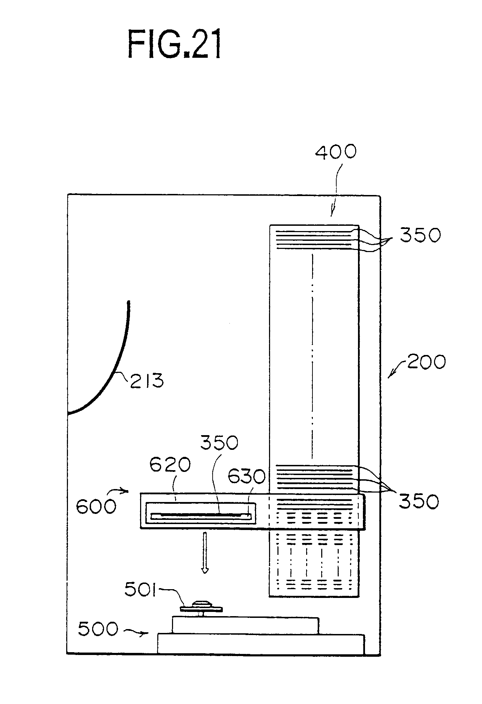

Thereafter, the carrier device is lowered as shown in Fig. 21. When the carrier device reaches the recording device 500, the clamper 642 clamps the disc 350 on the turntable 501. The information is recorded on the disc by the recording device. When the recording is finished, the carrier device 600 is moved up, so that the disc is engaged with the plate 631 of the extractor 630 to remove the disc from the turntable. At the same time, the clamper 642 is moved up to be disengaged from the turntable. Thus, the disc is released from clamping.

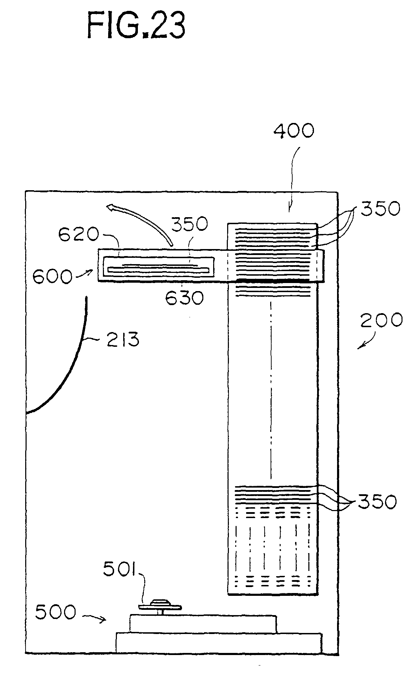

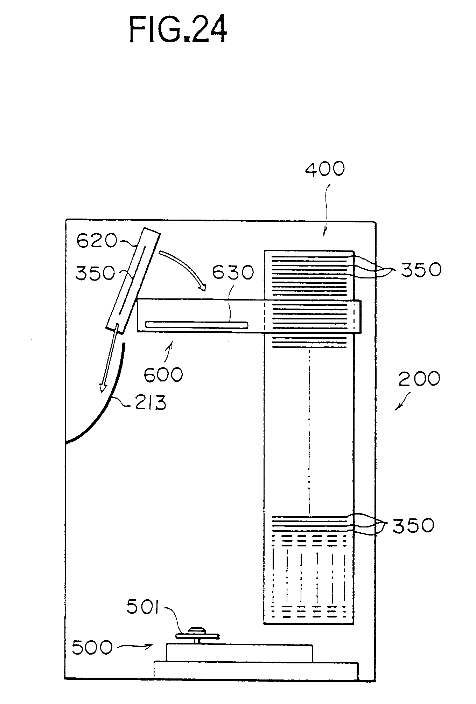

The carrier device 600 having the recorded disc 350 is moved up to the upper portion of the pocket 213 to rotate the tray 620 as shown in Fig. 23. In this state, the plate 671 is rotated in the direction d to engage the corner 671a with the recess 411. As shown in Fig. 24, the tray 620 is rotated to drop the disc in the pocket 213.

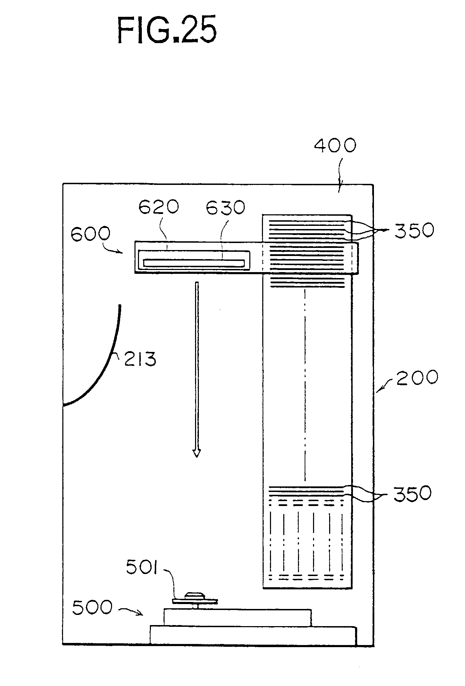

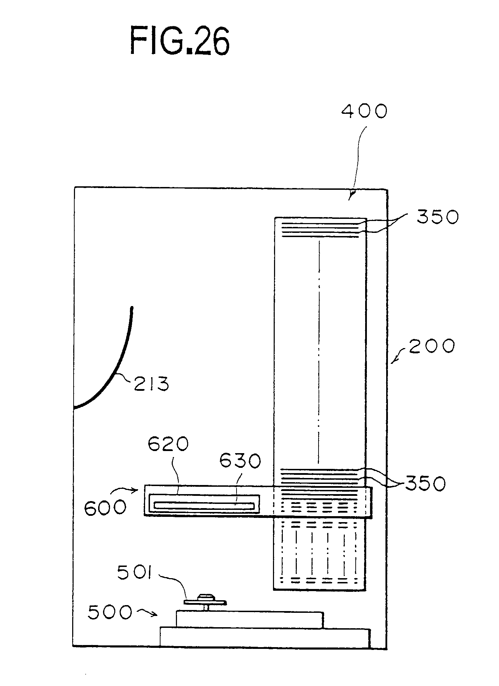

Thereafter, the tray is rotated back to the horizontal position as shown in Fig. 25. The plate 671 is moved in the direction c to disengage the corner from the recess. The carrier device is lowered to the recording device 500. Then the carrier device is moved to the next loading position as shown in Fig. 26.

In place of the initialization operation of the carrier device 600, the last loading position can be stored in a memory and the carrier device is moved to the position stored in the memory after discharging the recorded disc. Consequently, the time is shortened. It is effective if the number of discs in the storing portion becomes small.

In accordance with the present invention, since the disc is extracted from a lowermost disc in the disc holder without gripping it, it is not necessary to provide a wide distance between the discs in the holder. The loading, recording and discharging of the disc is performed while keeping the disc on the extractor. Thus, the carrier device is extremely simplified in construction. As a result, the disc is smoothly recorded to reduce the size of the system.

While the presently preferred embodiment of the present invention has been shown and described, it is to be understood that this disclosure is for the purpose of illustration and that various changes and modifications may be made without departing from the scope of the invention as set forth in the appended claims.

## Claims

1. An apparatus for recording a disc comprising:
a casing (450) having guide means (430 - 437) and disc outlet means (212);
a storing portion (400) provided in the casing for storing a plurality of unrecorded discs (350);
a carrier (600) provided to be moved along the guide means (430 - 437);
an extractor (630) provided on the carrier (600) for extracting one of said discs stored in the storing portion;
a recording device (500) disposed at a lower end portion of the casing (450) for recording an extracted disc;
discharging means (620) provided on the carrier (600) for discharging a recorded disc to the disc outlet means (212);
driving means (601 - 613) for moving the carrier along the guide means (430 - 437);
characterized in that
detection means (420, 669) are provided for detecting the position of the lowermost disc in the storing portion (400);
control means are provided being adapted to control movement of said carrier (600) via said driving means (601 - 613) from a waiting position to a detected lowermost disc position, to operate the extractor (630) to extract the lowermost disc, to lower the carrier (600) to the recording device (500) to record data on the disc, to raise the carrier to the outlet means (212) and discharge the disc and then to lower the carrier to the waiting position;
wherein said control means include a memory for storing the lowermost disc position and wherein the control means are adapted in the next recording step to move the carrier (600) rapidly from the waiting position to last lowermost disc position stored in memory and from there to the next lowermost disc position to be detected by said detection means (420, 669).

2. The apparatus according to claim 1, wherein,
the recording device (500) is disposed in a lower position of the casing (450), the outlet means (212) is disposed in an upper portion of the casing, and the storing portion (400) is provided between the recording device (500) and the outlet means (212), and the unrecorded discs are arranged in an extending direction of the guide means (430 - 437).

3. The apparatus according to claim 1 or 2, further comprising,
a start switch for producing a start signal, the control means being responsive to the start signal for controlling an operation of the apparatus.

4. The apparatus according to claim 1, 2 or 3, wherein, the storing portion (400) has a plurality of disc holders (300) each of which comprises a main plate (301), a pair of side plates (302, 303) on both sides of the main plate, arranged to form a U-shape in plan, wherein each side plate (302, 303) has a plurality of horizontal grooves (304, 305) for supporting a disc (350).

5. The apparatus according to one of the preceding claims, wherein the extractor has lugs (632) to be engaged with a disc (350) and is movable between a disc take-up position and a disc holding position on the carrier (600).

6. The apparatus according to one of the preceding claims, wherein the discharging means is provided for tilting the extractor (630) for discharging a disc on the extractor.

7. The apparatus according to one of the preceding claims, wherein the driving means (601 - 613) is mounted on the carrier (600).

8. The apparatus according to one of the preceding claims, wherein the control means is further arranged to initially position the extractor (630) at the disc take-up position, to upwardly move the carrier (600) thereby take-up a lower most disc by the extractor (630), and to move the extractor to the disc holding position thereby extracting the lower most disc by the lugs (632).

9. The apparatus according to one of the preceding claims, wherein the recording device (500) has a turntable (501) for mounting a disc, and the carrier (600) has a clamper (640) for clamping the disc on the turntable.

## Patentansprüche

1. Vorrichtung zum Aufzeichnen auf einer Scheibe, die folgendes aufweist:
ein Gehäuse (450), das Führungseinrichtungen (430 - 437) und eine Scheibenauslaßeinrichtung (212) hat;
einen Lagerabschnitt (400), der in dem Gehäuse zur Lagerung einer Vielzahl von nicht beschriebenen Scheiber (350) vorgesehen ist;
einen Träger (600), der vorgesehen ist entlang den Führungseinrichtungen (430 - 437) bewegt zu werden;
eine Entnahmeeinrichtung (630), die an dem Träger (600) zum Entnehmen einer der in dem Lagerabschnitt gelagerten Scheiben vorgesehen ist;
eine Aufzeichnungseinrichtung (500), die an einem unteren Endabschnitt des Gehäuses (450) zum Beschreiben einer entnommenen Scheibe angeordnet ist;
eine Entladeeinrichtung (620), die an dem Träger (600) zum Entladen einer beschriebenen Scheibe zu der Scheibenauslaßeinrichtung (212) vorgesehen ist;
eine Antriebseinrichtung (601 - 613) zum Bewegen des Trägers entlang der Führungseinrichtungen (430 - 437);
dadurch gekennzeichnet, daß
Erfassungseinrichtungen (420, 669) zum Erfassen der Position der untersten Scheibe in dem Lagerabschnitt (400) vorgesehen sind;
eine Steuereinrichtung vorgesehen ist, die so angepaßt ist, daß sie die Bewegung des Trägers (600) über die Antriebseinrichtung (601 - 613) aus einer Warteposition zu einer erfaßten untersten Scheibenposition steuert, um die Entnahmeeinrichtung (630) so zu betreiben, daß die unterste Scheibe entnommen wird, den Träger (600) auf die Aufzeichnungseinrichtung (500) absenkt, um Daten auf der Scheibe aufzuzeichnen, den Träger zu der Auslaßeinrichtung (212) anhebt und die Scheibe entlädt und anschließend den Träger in die Warteposition absenkt;
wobei die Steuereinrichtung einen Speicher zum Speichern der untersten Scheibenposition enthält und wobei die Steuereinrichtung so angepaßt ist, daß sie bei dem nächsten Aufzeichnungsschritt den Träger (600) rasch aus der Warteposition zu der letzten untersten Scheibenposition, die in dem Speicher gespeichert ist, bewegt und von dort zu der nächsten untersten Scheibenposition, die von den Erfassungseinrichtungen (420, 669) zu erfassen ist, bewegt.

2. Vorrichtung nach Anspruch 1,
wobei die Aufzeichnungseinrichtung (500) in einer unteren Position des Gehäuses (450) angeordnet ist, die Auslaßeinrichtung (212) in einer oberen Position des Gehäuses angeordnet ist und der Lagerabschnitt (400) zwischen der Aufzeichnungseinrichtung (500) und der Auslaßeinrichtung (212) vorgesehen ist und wobei die nicht beschriebenen Scheiben in der Richtung des Verlaufes der Führungseinrichtungen (430 - 437) angeordnet sind.

3. Vorrichtung nach Anspruch 1 oder 2, die ferner einen Startschalter zum Erzeugen eines Startsignals aufweist, wobei die Steuereinrichtung auf das Startsignal anspricht, um den Betrieb der Vorrichtung zu steuern.

4. Vorrichtung nach Anspruch 1, 2 oder 3,
wobei der Lagerabschnitt (400) eine Vielzahl von Scheibenhaltern (300) hat, von welchen jeder eine Hauptplatte (301) und ein Paar von Seitenplatten (302, 303) an beiden Seiten der Hauptplatte aufweist, die so angeordnet sind, daß sie in der Ebene eine U-Form bilden, wobei jede Seitenplatte (302, 303) eine Vielzahl von horizontalen Nuten (304, 305) zum Halten einer Scheibe (350) hat.

5. Vorrichtung nach einem der vorhergehenden Ansprüche,
wobei die Entnahmeeinrichtung Ansätze (632) aufweist, die mit einer Scheibe (350) in Eingriff gebracht werden und zwischen einer Scheibenaufnahmeposition und einer Scheibenhalteposition auf dem Träger (600) bewegbar ist.

6. Vorrichtung nach einem der vorhergehenden Ansprüche,
wobei die Entladeeinrichtung zum Kippen der Entnahmeeinrichtung (630) vorgesehen ist, um eine Scheibe auf der Entnahmeeinrichtung zu entladen.

7. Vorrichtung nach einem der vorhergehenden Ansprüche,
wobei die Antriebseinrichtung (601 - 613) an dem Träger (600) angebracht ist.

8. Vorrichtung nach einem der vorhergehenden Ansprüche,
wobei die Steuereinrichtung ferner so angeordnet ist, daß sie anfänglich die Entnahmeeinrichtung (630) an der Scheibenaufnahmeposition positioniert, den Träger (600) nach oben bewegt, wodurch eine unterste Scheibe durch die Entnahmeeinrichtung (630) aufgenommen wird, und die Entnahmeeinrichtung zu der Scheibenhalteposition bewegt, so daß die unterste Scheibe durch die Ansätze (632) entnommen wird.

9. Vorrichtung nach einem der vorhergehenden Ansprüche,
wobei die Aufzeichnungseinrichtung (500) eine Dreheinrichtung (501) zum Anbringen einer Scheibe hat und der Träger (600) eine Klemmeinrichtung (640) hat, um die Scheibe auf der Dreheinrichtung zu klemmen.

## Revendications

1. Appareil pour enregistrer un disque comprenant :
un meuble (450) ayant des moyens de guidage (430-437) et des moyens de sortie d'un disque (212);
une partie de stockage (400) placée dans le meuble pour stocker une pluralité de disques non-enregistrés (350) ;
un transporteur (600) pouvant se déplacer le long des moyens de guidage (430-437);
un extracteur (630) placé sur le transporteur (600) pour extraire un des disques non-enregistrés stockés dans la partie de stockage ;
un dispositif d'enregistrement (500) disposé à l'extrémité du meuble (450) pour enregistrer un disque extrait ;
des moyens de déchargement (620) placés sur le transporteur (600) pour décharger un disque enregistré vers les moyens de sortie du disque (212);
des moyens moteurs (601-613) pour déplacer le transporteur le long des moyens de guidage (430-437);
caractérisé en ce que
des moyens de détection (420,669) sont prévus pour détecter la position du disque le plus bas dans la partie de stockage (400) ;
des moyens de contrôle sont prévus, qui sont conçus pour contrôler le mouvement du transporteur (600) via les moyens moteurs (601-613) d'une position d'attente vers la position du disque le plus bas détecté, pour faire fonctionner l'extracteur (630) qui extrait le disque le plus bas, pour abaisser le transporteur (600) vers le dispositif d'enregistrement (500) pour enregistrer des données sur le disque, pour hausser le transporteur vers les moyens de sortie (212) et décharger le disque et pour ensuite abaisser le transporteur dans sa position d'attente ;
dans lequel les moyens de contrôle comprennent une mémoire pour stocker la position du disque le plus bas et dans lequel les moyens de contrôle sont conçus pour, dans l'étape suivante d'enregistrement, déplacer le transporteur (600) rapidement de la position d'attente vers la position du dernier disque le plus bas stocké en mémoire et depuis là vers la position du disque le plus bas suivant qui est détecté par les moyens de détection (420,669).

2. Appareil selon la revendication 1, dans lequel le dispositif d'enregistrement (500) est placé en position inférieure dans le meuble (450), les moyens de sortie (212) sont placés en position supérieure dans le meuble, et la partie de stockage (400) est placée entre le dispositif d'enregistrement (500) et les moyens de sortie (212), et les disques non-enregistrés sont disposés dans la direction d'extension des moyens de guidage (430-437).

3. Appareil selon la revendication 1 ou 2, comprenant en outre un interrupteur de départ pour produire un signal de départ, les moyens de contrôle répondant au signal de départ afin de contrôler le fonctionnement de l'appareil.

4. Appareil selon la revendication 1, 2 ou 3, dans lequel les moyens de stockage (400) présentent une pluralité de montures pour disques (300) dont chacune comprend un plateau principal (301), une paire de plateaux latéraux (302,303) de chaque côté du plateau principal, disposée pour former un U vu en plan, chaque plateau latéral (302,303) ayant une pluralité de gorges horizontales (304,305) pour supporter un disque (350).

5. Appareil selon l'une des revendications précédentes, dans lequel l'extracteur présente des pattes (632) qui s'engagent avec un disque (350) et est mobile entre une position de prise de disque et une position de maintien du disque sur le transporteur (600).

6. Appareil selon l'une des revendications précédentes, dans lequel les moyens de déchargement sont conçus pour faire basculer l'extracteur (630) afin de décharger un disque sur l'extracteur.

7. Appareil selon l'une des revendications précédentes, dans lequel les moyens moteurs (601-613) sont montés sur le transporteur (600).

8. Appareil selon l'une des revendications précédentes, dans lequel les moyens de contrôle sont de plus disposés afin de positionner initialement l'extracteur (630) sur la position de prise de disque, pour déplacer vers le haut le transporteur (600) en faisant prendre le disque le plus bas par l'extracteur (630), et pour déplacer l'extracteur jusqu'à la position de maintien du disque, extrayant ainsi le disque le plus bas au moyen des pattes (632).

9. Appareil selon l'une des revendications précédentes, dans lequel le dispositif d'enregistrement (500) comprend une table tournante (501) pour y monter un disque et le transporteur (600) comprend une pince (640) pour pincer le disque sur la table tournante.
